# EUROPEAN PATENT APPLICATION

(11) **EP 3 133 460 A1**
(43) Date of publication of application: **22.02.2017**
(21) Application number: 15002446.1
(22) Date of filing: 18.08.2015
(51) Int. Cl.: G05D 11/13, F17D 3/12

(54) **METHOD OF PROVIDING FUEL GAS TO A CUSTOMER**

(71) Applicant: Linde Aktiengesellschaft, 80331 München (DE)
(72) Inventor: Elshaug, Rhyan, VIC, 3073 (AU)
(74) Representative: Zahn, Christoph

(57) **Abstract**

The present invention relates to a method of providing fuel gas to a customer, wherein a first gas stream and a second gas stream are provided, the first gas stream and/or the second gas stream comprising a fuel gas, wherein a first flowrate of the first gas stream is measured (211), wherein a second flowrate of the second gas stream is measured (211), wherein at least one valve is controlled depending on the measured first flowrate and on the measured second flowrate, so that the first gas stream is blended with the second gas stream according to a predetermined ratio of the first flowrate to the second flowrate, whereby a third gas stream is produced (214), and whereby the third gas stream is conducted to the customer.

## Description

The present invention relates to method of providing fuel gas to a customer and a fuel gas provision system adapted to provide fuel gas to a customer.

### Prior art

Fuel gas, like reticulated natural gas (RNG), liquefied natural gas (LNG), biogas, or propane, can be used to fuel boilers in order to produce heat and/or power. For this purpose, the fuel gas can be provided by a fuel gas supplier to a respective customer. It can be the case that a customer can be supplied with different fuel gases by different fuel gas suppliers.

It is desirable to offer a way of providing fuel gas to a customer, especially to provide different fuel gases by different fuel gas suppliers.

### Disclosure of the invention

The invention relates to a method of providing fuel gas to a customer and a fuel gas provision system with the features of the independent claims. Further advantages and embodiments of the invention will become apparent from the description and the appended figures.

According to the invention, a first gas stream and a second gas stream are provided, the first gas stream and/or the second gas stream comprising a fuel gas. A first flowrate of the first gas stream and a second flowrate of the second gas stream are measured. At least one valve is controlled depending on the measured first flowrate and on the measured second flowrate, so that the first gas stream is blended with the second gas stream according to a predetermined ratio of the first flowrate to the second flowrate, whereby a third gas stream is produced. The third gas stream is conducted as fuel gas stream to the customer.

The invention further relates to a corresponding fuel gas provision system adapted to provide fuel gas to a customer. The fuel gas provision system comprises a first flowmeter adapted to measure the first flowrate of the first gas stream, a second flowmeter adapted to measure the second flowrate of the second gas stream, at least one valve adapted to blend the first gas stream with the second gas stream, and a control unit. The control unit is preferably constructed as a programmable logic controller (PLC). The control unit is especially connected with the flowmeter and the at least one valve and is especially adapted to control the at least one valve. Moreover, the control unit is adapted to perform a preferred embodiment of the method according to the invention. Advantages and embodiments of the gas provision system and of the method of providing fuel gas to a customer according to the invention arise from the following description in an analogous manner.

The first gas stream is especially conducted through first gas transfer means and the second gas stream is especially conducted through second gas transfer means. The first and second gas transfer means can respectively be constructed e.g. as pipeline, pipe, hose, etc. The first or second flowmeter are especially arranged in the corresponding first or second fuel gas transfer means, respectively. The at least one valve is especially arranged in the first and/or second transfer means, particularly at a junction connecting the first and second gas transfer means.

The first and second flowrate are especially not controlled or adjusted in the course of the method according to the invention. Especially, the flowrates or their respective maximum values cannot be influenced, but are predetermined. Moreover, the flowrate of the third gas stream is particularly not controlled in the course of the method. Instead, the first and second flowrate are especially constantly determined and compared with each other, in order to blend the first and second gas streams according to the desired predetermined ratio of flowrates.

### Advantages of the invention

The invention is especially convenient for the provision of fuel gas to customers (retail customers as well as industrial customers) by gas suppliers. The first and the second gas streams can be supplied by the same gas supplier or by different gas suppliers. Particularly, the ratio of the first flowrate to the second flowrate is predetermined by the corresponding gas suppliers.

The desired ratio of the first gas stream to the second gas stream can for example be predetermined according to contractual obligations between customer and gas suppliers. For example, a certain amount of the first or the second gas, respectively, can be designated from the corresponding gas supplier toward the customer.

The predetermined ratio can be a constant ratio or can also be adapted in the course of the method, especially according to certain predetermined conditions. The ratio can especially be determined so that a certain minimum amount of corresponding gas is used for the third gas stream or that a certain maximum amount of corresponding gas is not exceeded.

By the invention, distinct advantages for both costumer and supplier can be achieved. For example, if there is a shortage of one of the gas streams, the ratio can appropriately be adapted in order to guarantee that an adequate amount of gas is provided to the customer. Flexibility can be enhanced, so that the customer is not dependent on one single gas stream or its respective gas supplier. The second gas stream can for example be provided to make up a potential shortfall between demand and availability of the first gas stream, and vice versa. Thus, provision of fuel gas can be guaranteed, also in case of a shortage of one of the gas streams.

Moreover, the ratio can for example be changed if a designated amount of one of the gases is exhausted. Thus, the portion of the corresponding gas stream can especially be reduced whereas the portion of the other gas stream can especially be enhanced. If a designated amount of one of the gases is exhausted, the customer can still be provided with the other gas stream, guaranteeing that an adequate amount of fuel gas is provided to the customer. Thus, it can be assured that certain obligations of the customer towards the respective gas suppliers can be satisfied. Furthermore, it can be guaranteed that the customer does not inadvertently exceed the designated amount of gas and does not have to be charged with penalties.

Advantageously, a valve position of the at least one valve, preferably of a three-way-valve, is controlled depending on the measured first flowrate and on the measured second flowrate, so that the first gas stream is blended with the second gas stream according to the predetermined ratio of the first flowrate to the second flowrate. A size of the at last one valve can especially be chosen depending on the especially predetermined maximum value of the first and second flowrate. Particularly, a current-to-pressure converter (I/P converter) is used in order to accordingly actuate the valve position. By the current-to-pressure converter a proportional electrical signal can be converted to a proportional pneumatic signal.

Advantageously, a three-way-valve is used as the at least one valve. Thus, only one element is actuated in order to blend the two gas streams with the desired ratio. Particularly, in a first valve position of the three-way-valve, only the first gas stream is used to produce the third gas stream. In other words, the ratio of the first flowrate to the second flowrate is 1:0. In a second valve position of the three-way-valve, especially only the second gas stream is used to produce the third gas stream. In other words, the ratio of the first flowrate to the second flowrate is 0:1. By varying the valve position between these two valve positions, the third gas stream can easily be produced with the predetermined ratio.

Alternatively, two separate valves can be used. Thus, for each of the gas streams one valve can be provided. These two separate valves can particularly be controlled in dependence of each other. Particularly, a ratio of the valve positions of the two valves can be adapted as manipulated variables in the course of a control loop. Alternatively, the valve positions of the two valves per se can be used as manipulated variables.

According to a preferred embodiment of the invention, the ratio of the first flowrate to the second flowrate is controlled as control variable in a control loop, especially in a PID (proportional-integral-derivative) control loop. The predetermined ratio is especially used as setpoint of the control loop. Advantageously, the valve position of the at least one valve is controlled as manipulated variable in the course of the control loop. In a particularly advantageous embodiment, the valve position of the three-way-valve is controlled as manipulated variable in the course of the control loop. Particularly, the control unit is adapted to conduct the control loop.

Preferably, a total amount of the first gas stream and/or of the second gas stream as a portion of the third gas stream is determined during a predetermined time interval. For example, the total amount of the respective gas during one day, one week, one month, or one year can be determined. Thus, it can especially be monitored whether the exhausted amount of the corresponding gas exceeds an amount designated to the customer by the supplier, i.e. if the exhausted amount exceeds a predetermined limit.

Advantageously, if the total amount of the first gas stream during a first predetermined time interval exceeds a first predetermined limit, the ratio of the first flowrate to the second flowrate is set to 0:1. Thus, only the second gas stream is used to produce the third gas stream. Analogously, if the total amount of the second gas stream during a second predetermined time interval exceeds a second predetermined limit, the ratio of the first flowrate to the second flowrate is preferably set to 1:0. Thus, only the first gas stream is used to produce the third gas stream. This way, a clamp can be provided, so that if a maximum amount of one of gas streams during the respective time interval (e.g. a maximum daily flow) is exceeded, the third fuel gas stream is produced by the other one of the gas streams.

Advantageously, natural gas, especially reticulated natural gas (RNG) or liquefied natural gas (LNG), biogas, methane, and/or propane air are used as the first gas stream and/or as the second gas stream, or air is used as the first or second gas stream. Particularly, air can be used as first gas stream and propane can be used as second gas stream (or contrariwise) in order to produce synthetic natural gas (SNG) as third gas stream.

Especially, gases with similar calorific values are used as first and second gas stream. Thus, efficient combustion of the third gas stream can be guaranteed even if the ratio of the flowrates is changed. Particularly, a Wobbe index of the third gas stream is essentially constant for different ratios. The Wobbe index can be used to compare the combustion energy output of third gas streams with different compositions. Combustion of different third gas streams with different compositions but essentially the same Wobbe index yield essentially the same energy output. It is especially not required to monitor the Wobbe index of the blended fuel gas stream.

According to a preferred embodiment of the invention, reticulated natural gas (RNG) is used as the first gas stream and liquefied natural gas (LNG) is used as the second gas stream. Reticulated natural gas is especially supplied by a grid, for example by pipelines, and is thus especially transferred to the customer from a distant location. In contrast to that, LNG can for example be stored in situ, i.e. comparatively close to the customer's location.

Preferably, the first gas stream is provided by a first gas supplier and the second gas stream is provided by a second gas supplier. First and second gas supplier are preferably not the same. Thus, flexibility of the provision of fuel gas can be enhanced. The customer is not dependent on one single gas supplier.

Advantageously, the first flowrate is predetermined by the first gas supplier and/or the second flowrate is predetermined by the second gas supplier. The flowrates are especially dependent on the way the corresponding gas is injected in corresponding gas transfer means by the respective gas supplier.

Advantageously, the third gas stream is used to fuel a boiler, a power generator and/or a power plant. For example, the third gas stream can be used for boilers in private households, i.e. for retail customers, especially for heat production and/or power generation, e.g. water heating, central heating, boiler-based power generation, etc. The third gas stream can for example also be used for industrial power generation in power plants, especially for cogeneration or combined heat and power (CHP), wherein both electricity and useful heat are generated. Moreover, the fuel gas can also be used for heat production and/or power generation for industrial consumers, e.g. for rendering plants, abattoirs, etc.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
- FIG. 1: schematically shows a preferred embodiment of a fuel gas provision system according to the invention, which is adapted to conduct a preferred embodiment of a method according to the invention.
- FIG. 2: schematically shows a preferred embodiment of a method according to the invention as a block diagram.

### Detailed description

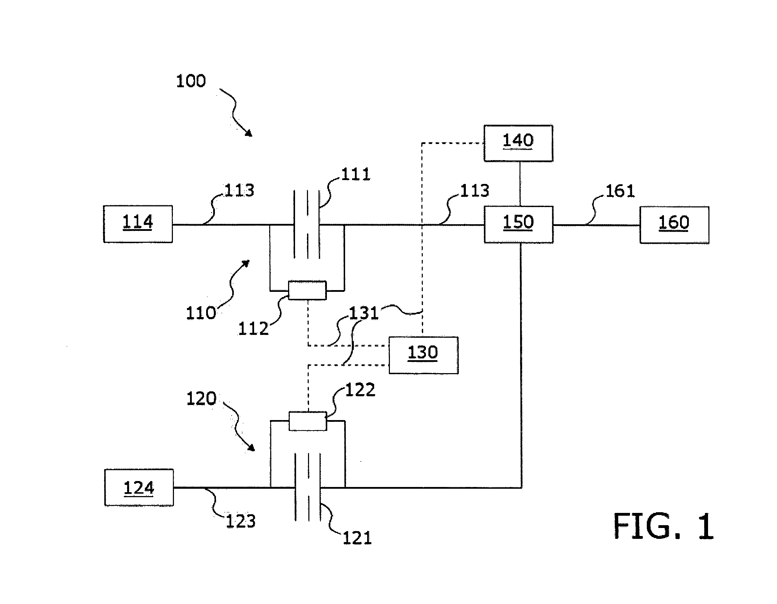

In FIG. 1 a preferred embodiment of a fuel gas provision system 100 according to the invention is schematically shown, providing a fuel gas to a customer. The customer can for example be a retail customer and can use the provided fuel gas to fuel a boiler 160 in order to produce heat and power. The provided fuel gas could also be used by an industrial consumer to fuel a boiler 160, e.g. for cogeneration or combined heat and power (CHP) in a power plant.

In order to provide the fuel gas to the customer, a first gas stream and a second gas stream are blended with each other. A first gas, particularly reticulated natural gas (RNG) is provided by a first gas supplier. The RNG is conducted in form of the first gas stream or RNG stream with a first flowrate through first gas transfer means in form of a first pipeline 113. A second gas, particularly liquefied natural gas (LNG) is provided by a second gas supplier. The LNG is conducted in form of the second gas stream or LNG stream with a second flowrate through second gas transfer means in form of a second pipeline 123.

The LNG can for example be stored in a tank 124 in situ at the customer's location. The tank 124 can be transported to the customer's location or refilled by the second gas supplier. The RNG can for example be provided by a grid 114. Thus, the RNG can be transferred to the customer by the first gas supplier from a distant location.

At a junction a three-way-valve 150 is provided, connecting the first and second pipeline 123 and 113. By the three-way-valve 150 the RNG stream can be blended with the LNG stream, producing a third gas stream. The third gas stream is conducted to the boiler 160 through a pipeline 161.

The LNG stream and the RNG stream are blended with each other according to a predetermined ratio of the first flowrate to the second flowrate. This ratio can be predetermined by contractual obligations between the customer and the gas suppliers. For example, the ratio can be determined so that a minimum amount of RNG and LNG is used per day for the third gas stream and that a maximum amount of RNG and LNG is not exceeded per day.

In order to blend the LNG stream and the RNG stream in the desired ratio, a preferred embodiment of the method according to the invention is conducted. For this purpose, the fuel gas provision system 100 comprises a first flowmeter 110 arranged in the first pipeline 113 and adapted to measure the first flowrate of the RNG stream and a second flowmeter 120 arranged in the second pipeline 123 adapted to measure the second flowrate of the LNG stream.

The flowmeters 110 and 120 can for example be constructed as orifice plate flowmeter, comprising an orifice plate 111 or 121, respectively, constricting the corresponding gas stream. By a differential pressure sensor 112 (or 122, respectively) a first pressure upstream the corresponding orifice plate 111 (or 121, respectively) and a second pressure downstream the corresponding orifice plate 111 (or 121, respectively) are measured. By the pressure difference between corresponding first and the second pressure, the flowrate of the respective gas stream can be determined.

The flowmeters 110 and 120 are connected with a control unit 130 and transmit the measured first and second flowrate to the control unit 130. The control unit 130 is especially constructed as a programmable logic controller (PLC).

The programmable logic controller 130 is adapted to control the three-way-valve 150. For this purpose, a current-to-pressure converter (I/P converter) 140 is provided in order to actuate a valve position of the three-way-valve 150 by converting a proportional electrical signal (transmitted by the PLC 130) to a proportional pneumatic signal (actuating the valve position according to the PLC's electrical signal).

Flowmeter 110, and 120, programmable logic controller 130, and three-way-valve 150 or I/P converter 140, respectively, can be connected via an appropriate communication system, especially via a bus-system 131, e.g. a fieldbus.

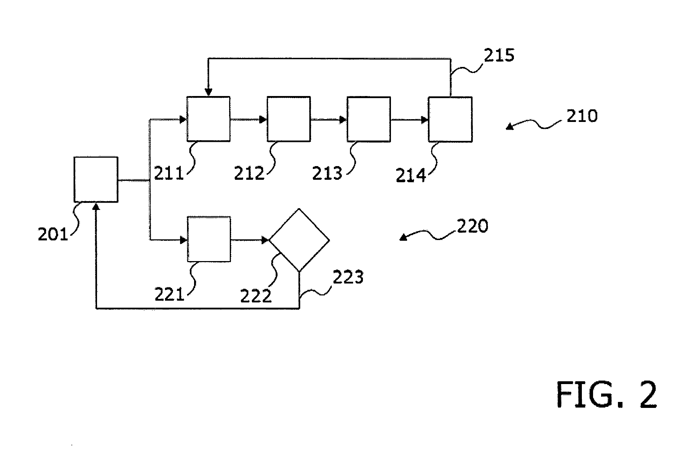

The programmable logic controller 140 is particularly adapted to conduct the preferred embodiment of the method according to the invention, which will be discussed in the following in reference to FIG. 2, showing said preferred embodiment of the method according to the invention as a block diagram.

In step 201 the ratio of the first flowrate (RNG flowrate) to the second flowrate (LNG flowrate) is predetermined. For example the ratio can be set to 2:3.

The control unit 130 conducts a control loop 210, particularly a PID control loop in order to produce the blended gas stream with the desired ratio. The predetermined ratio is used as setpoint of this PID control loop. In the course of the control loop 210, the first and the second flowrate are determined by the first and second flowmeter 110, 120 in step 211 and transmitted to the control unit 130.

In step 212, the control unit 130 determines an actual ratio of the measured first flowrate to the measured second flowrate. This actual ratio of the measured flowrates is controlled as control variable in the course of the PID control loop 210.

Depending on a difference between the actual and the predetermined ratio, the control unit 130 determines a valve position of the three-way-valve 150 as manipulated variable in step 213.

In step 214 the control unit 130 actuates the three-way-valve 150 according to the determined valve position. For this purpose, the control unit 130 transmits an according electrical signal to the current-to-pressure converter 140. After actuating the three-way-valve 150, the PID control loop is conducted again according to step 215.

For example, an electrical signal of e.g. 4 mA is converted by the current-to-pressure converter 140 into a valve position, by which only LNG is used to produce the third gas stream, corresponding to a ratio of 0:1. For example, an electrical signal of 20 mA is converted by the current-to-pressure converter 140 into a valve position, by which only RNG is used to produce the third gas stream, corresponding to a ratio of 1:0.

Parallel to the PID control loop 210, the control unit 130 conducts a supervision of the total amount of gas. In step 221, the control unit 130 determines a total amount of the RNG stream and the LNG stream conducted to the customer as portion of the third gas stream during a predetermined time interval of e.g. one day.

In step 222, the control unit 130 checks, whether these total amounts exceed predetermined limits of a maximum amount per day. For example, a limit of 500 kg/day can be predetermined as a first limit for the RNG stream and a limit of 200 kg/day can be predetermined as a second limit for the LNG stream.

If one of the gas streams exceeds the respective limit, the ratio is changed according to step 223. For example if the total amount of the RNG exceeds the limit of 500 kg/day, the ratio is changed to 0:1. If the total amount of the LNG exceeds the limit of 200 kg/day, the ratio is changed to 1:0. The PID control loop 210 is then conducted with this new predetermined ratio as setpoint.

### Reference list

- 100: fuel gas provision system
- 110: first flowmeter, orifice plate flowmeter
- 111: orifice plate
- 112: differential pressure sensor
- 113: first gas transfer means, first pipeline
- 114: grid
- 120: second flowmeter, orifice plate flowmeter
- 121: orifice plate
- 122: differential pressure sensor
- 123: second gas transfer means, second pipeline
- 124: tank
- 130: control unit, programmable logic controller
- 131: bus, fieldbus
- 140: current-to-pressure converter
- 150: three-way-valve
- 160: boiler
- 161: pipeline

- 201 to 223: steps of the method
- 210: control loop, PID control loop
- 220: supervision of the total fuel gas flow.

## Claims

1. Method of providing fuel gas to a customer,
- wherein a first gas stream and a second gas stream are provided, the first gas stream and/or the second gas stream comprising a fuel gas,
- wherein a first flowrate of the first gas stream is measured (211),
- wherein a second flowrate of the second gas stream is measured (211),
- wherein at least one valve (150) is controlled depending on the measured first flowrate and on the measured second flowrate, so that the first gas stream is blended with the second gas stream according to a predetermined ratio of the first flowrate to the second flowrate, whereby a third gas stream is produced (214), and
- whereby the third gas stream is conducted as fuel gas to the customer.

2. The method according to claim 1, wherein the at least one valve (150) includes a three-way-valve.

3. The method according to claim 1 or 2, wherein a valve position of the at least one valve is controlled depending on the measured first flowrate and on the measured second flowrate, so that the first gas stream is blended with the second gas stream according to the predetermined ratio of the first flowrate to the second flowrate (214,215).

4. The method according to any one of the preceding claims, wherein the ratio of the first flowrate to the second flowrate is controlled as control variable in a control loop, especially in a PID control loop (210).

5. The method according to claim 3 and 4, wherein the valve position of the at least one valve (150) is controlled as manipulated variable in the control loop (210, 213).

6. The method according to any one of the preceding claims, wherein a total amount of the first gas stream and/or of the second gas stream as a portion of the third gas stream is determined (221) during a predetermined time interval.

7. The method according to claim 6, wherein the ratio of the first flowrate to the second flowrate is set to 0:1 if the total amount of the first gas stream during a first predetermined time interval exceeds a first predetermined limit (223).

8. The method according to claim 6, wherein the ratio of the first flowrate to the second flowrate is set to 1:0 if the total amount of the second gas stream during a second predetermined time interval exceeds a second predetermined limit (223).

9. The method according to any one of the preceding claims, wherein natural gas, biogas, propane and/or methane are used as the first gas stream and/or as the second gas stream, or wherein air is used as the first gas stream or as the second gas stream.

10. The method according to any one of the preceding claims, wherein reticulated natural gas is used as the first gas stream and wherein liquefied natural gas is used as the second gas stream.

11. The method according to any one of the preceding claims, wherein the first gas stream is provided by a first gas supplier and wherein the second gas stream is provided by a second gas supplier.

12. The method according to claim 11, wherein the first flowrate is predetermined by the first gas supplier and/or wherein the second flowrate is predetermined by the second gas supplier.

13. The method according to any one of the preceding claims, wherein the third gas stream is used to fuel a boiler (160), a power generator and/or a power plant.

14. Fuel gas provision system (110) adapted to provide fuel gas to a customer comprising:
- a first flowmeter (110) adapted to measure a first flowrate of a first gas stream,
- a second flowmeter (120) adapted to measure a second flowrate of a second gas stream,
- at least one valve (150) adapted to blend the first gas stream with the second gas stream,
- a control unit (130) adapted to perform a method according to any one of the preceding claims.
